# EUROPEAN PATENT SPECIFICATION

(11) **EP 3 388 936 B1**
(45) Date of publication and mention of the grant of the patent: **12.02.2020**
(21) Application number: 17166189.5
(22) Date of filing: 12.04.2017
(51) Int. Cl.: G06F 3/16, G06F 1/32, H04W 52/02, G06F 3/0488, G06F 1/16, G06F 1/3234

(54) **MEDIA PLAYER AND A METHOD OF OPERATING A MEDIA PLAYER**
MEDIENSPIELER UND VERFAHREN ZUM BETRIEB EINES MEDIENSPIELERS
LECTEUR MULTIMÉDIA ET PROCÉDÉ DE FONCTIONNEMENT D'UN LECTEUR MULTIMÉDIA

(43) Date of publication of application: 17.10.2018
(73) Proprietor: Vestel Elektronik Sanayi ve Ticaret A.S., 45030 Manisa (TR)
(72) Inventor: ÖZEL, Ahmet, 45030 Manisa (TR)
(74) Representative: Flint, Adam

(56) References cited:
- EP-A1- 2 876 538
- US-A1- 2009 197 635
- US-A1- 2016 011 768

## Description

### Technical Field

The present disclosure relates to a media player and a method of operating a media player.

### Background

Various different types of media player, that is, a device that is able at least to play back media, are known. The media may be for example audio only, or video or still images only, or video/still images and audio. The media may be in digital form. The media may be stored on the device and/or streamed to the device from some server or other storage, over for example the Internet or a local area network, etc.

Many media players have a touchscreen. The touchscreen enables video and still images to be displayed by the device, and also provides an interface by which a user can input commands to the device by "taps" (a typically rapid, brief touch on the screen, typically by a user's digit such as a finger or some other input device) or a "swipe" (which is typically brought about by a user's digit or other input device touching the screen and then being drawn along a portion of the screen before being released from contact with the screen).

US2016011768A1 discloses a mobile terminal including a sensing unit configured to sense a plurality of taps applied to a display unit and a controller configured to control the display unit to be in a deactivated state, receive a plurality of taps applied to the display unit in the deactivated state, and execute a voice recognition function while maintaining the display unit in the deactivated state, when a pattern formed by the plurality of taps matches a preset pattern. US2009197635A1 discloses a mobile terminal in which media control functions can be controlled while the mobile terminal is in an inactive state.

### Summary

The invention is defined by the independent claims. Further aspects of the invention are outlined in the dependent claims. Embodiments which do not fall within the scope of the claims do not describe part of the present invention. According to a first aspect disclosed herein, there is provided a media player for playing media, the media player comprising:
a controller; and
a touchscreen operable to receive a touch input and configured to output corresponding touch input data to the controller, the touchscreen having an inactive display state, which is a power-saving state in which the touchscreen is not displaying any image, and an active display state, in which the touchscreen is displaying an image at a full or high brightness;
wherein the controller is to control the media player in accordance with touch input data received from the touchscreen;
wherein the touchscreen is divided into plural touch-sensitive input regions which are associated with different media control functions;
wherein the controller is configured such that, in the case that the touchscreen is in the inactive display state and touch input data received from the touchscreen indicates that a touch input received at one of the plural touch-sensitive input regions concerns a media control function, the controller operates the media player to perform the media control function associated with the touch-sensitive region at which the touch input was received, in accordance with the touch input data received from the touchscreen without causing the touchscreen to enter the active display state.

In examples, a user can control the media player (or control the media player functions in the case that the media player is part of some other device, such as a smartphone, etc.) without waking the screen and therefore without using electrical power unnecessarily.

It may be noted that in general and in some examples, in the inactive display state, which may be regarded as a power-saving state, the touchscreen is not displaying any image. In the inactive display state, the media player, and in particular the touchscreen, may or may not be able to receive and act on touch inputs, depending on the set up of the media player. On the other hand, in general and in some examples, in an active display state, the touchscreen will typically be displaying an image (at high or full brightness) and is able to receive and act on touch inputs, i.e. is responsive to a touch input.

As just one example of the arrangement, one touch-sensitive input region might be associated with a "play" control and a "pause" control and another touch-sensitive input region might be associated with a fast forward control and a fast backward or rewind control.

In an example, the media player is configured such that a double-tap on the touchscreen is required as a touch input for at least one media control function in order to cause the touchscreen to output corresponding touch input data to the controller. This can help to avoid or minimise inadvertent or unintentional control of the media player functions.

In an example, the media player may be configured such that the touchscreen is responsive to a tap on the touchscreen when not in the active display state so as to be able to register the tap as the first of a double-tap on the touchscreen. The touchscreen may for example be continuously responsive or periodically responsive to a tap on the touchscreen when not in the active display state.

In an example, the media player comprises a proximity sensor configured to be responsive to proximity of a user's digit or other input device during a tap on the touchscreen so as to be able to register the tap as the first of a double-tap on the touchscreen..

In an example, the media player is configured such that two simultaneous touches on the touchscreen are required as a touch input for at least one media control function in order to cause the touchscreen to output corresponding touch input data to the controller.

According to a second aspect disclosed herein, there is provided a method of operating a media player which has a touchscreen and a controller, wherein the touchscreen is operable to receive touch inputs and configured to output corresponding touch input data to the controller, wherein the touchscreen has an inactive display state, which is a power-saving state in which the touchscreen is not displaying any image, and an active display state, in which the touchscreen is displaying an image at a full or high brightness and wherein the touchscreen is divided into plural touch-sensitive regions which are associated with different media control functions, the method comprising:
receiving a touch input at one of the plural touch-sensitive regions whilst the touchscreen is in the inactive display state;
determining that touch input data received from the touchscreen indicates that the touch input concerns a media control function; and
controlling the media player to perform the media control function associated with the touch-sensitive region at which the touch input was received, in accordance with the touch input data received from the touchscreen without causing the touchscreen to enter the active display state.

### Brief Description of the Drawings

To assist understanding of the present disclosure and to show how embodiments may be put into effect, reference is made by way of example to the accompanying drawings in which:
Figure 1 shows schematically an example of a media player; and
Figures 2A and 2B show a logic diagram for an example of operation of a media player.

### Detailed Description

As mentioned, various different types of media player, that is, a device that is able at least to play back media, are known. The media may be for example audio only, or video or still images only, or video/still images and audio. The media may be in digital form. The media may be stored on the device and/or streamed to the device from some server or other storage, over for example the Internet.

The media player may be a dedicated media player, which is only able to operate as a media player, i.e., can play back media, with other related functions such as pause, rewind, fast forward, skip forward to the next track or backwards to the previous track, volume control, etc. The media player may be part of or built into some other device that can perform other functions, such as a personal computer, a tablet computer, a smartphone, a so-called "phablet" (a large smartphone, having a size that is more like the size of a typical tablet computer), etc.

Many media players have a touchscreen. The touchscreen enables video and still images to be displayed by the device, and also provides an interface by which a user can input commands to the device. The commands may be input for example by "taps" (a typically rapid, brief touch on the screen, typically by a user's digit such as a finger or some other input device such as a stylus) or a "swipe" or "slide" (which is typically brought about by a user's digit or other input device such as a stylus touching the screen and then being drawn along a portion of the screen before being released from contact with the screen), etc.

It is common for the screen of a media player to be put into some inactive or power-saving state after some period of time following an input to reduce power consumption. This is particularly important for battery-powered media players in order to prolong battery life. For example, the screen may be put into a state where it is completely blank and not displaying any image. As another example, the screen may be put into a state in which the brightness is reduced compared to a full or high brightness "active" state. In the case of the screen being a touchscreen, the touchscreen may or may not be able to register and act on touch inputs whilst in the inactive or power-saving state, depending on the set-up and configuration of the device. In general, this state of the media player will be referred to herein as an "inactive display state", recognising that whilst the display is in some power-saving mode and may be displaying no image or displaying an image at reduced brightness, the touchscreen may or may not be able to register touch inputs depending on the set-up of the device.

In contrast, in an active display state, the screen is displaying an image (possibly at full or high brightness, in contrast to a dim screen in a power-saving inactive display state). Moreover, typically and in the case of the screen being a touchscreen, the touchscreen is able to register and act on touch inputs, i.e. the touchscreen is responsive to a touch input, whilst in an active display state.

A problem is that in order to control operation of a media player that uses a touchscreen for receiving control inputs for controlling the media player, the user has to touch the touchscreen (again, using for example a finger or some stylus or other input device). But in many existing media players, including in particular smartphones or tablets or the like that have a media player function, touching the touchscreen whilst the screen is in an inactive display state may have no effect whatsoever: the user often has to press some button in order to "wake" the screen in order for the touchscreen to be responsive to touch inputs. In other existing media players, including in particular smartphones or tablets or the like that have a media player function, touching the touchscreen whilst the screen is in an inactive display state may be sufficient to cause the touchscreen to be responsive to touch inputs. However, in either case, causing the touchscreen to become responsive to touch inputs results in the screen entering an active display state in which the screen is displaying images (possibly at full or high brightness). The media player is therefore consuming electrical power at a high level, even though the user may for example simply have wanted to increase the volume of an audio track being played back, or fast forward to the next audio track, etc.

In examples described herein, a media player for playing media has a controller and a touchscreen operable to receive a touch input and configured to output corresponding touch input data to the controller. The controller is configured to control the media player in accordance with touch input data received from the touchscreen. The controller is configured such that, in the case that the touchscreen is in an inactive display state and touch input data received from the touchscreen indicates that the touch input concerns a media control function, the controller operates to control the media player in accordance with the touch input data received from the touchscreen without causing the touchscreen to enter an active display state. Accordingly the user can control the media player (or control the media player functions in the case that the media player is part of some other device, such as a smartphone, etc.) without waking the screen and therefore without using electrical power unnecessarily.

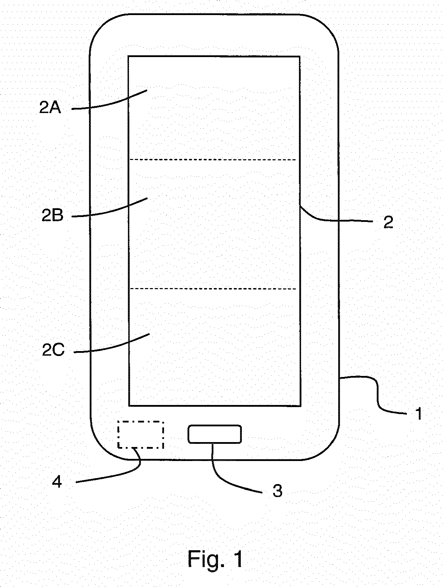

Referring now to Figure 1, there is shown an example of a media player 1. In this example, the media player 1 is part of a smartphone or a tablet, etc. In other examples, the media player 1 may be a dedicated media player.

The media player 1 has a touchscreen 2. The touchscreen 2 may be for example a capacitive touchscreen or a resistive touchscreen. The media player 1 may have one or more control buttons 3 which the user must press to activate the relevant control. The media player 1 has a controller 4, which may be implemented by one or more processors. The media player 1 has some form of storage (not shown), at least for temporarily storing files, such as media files, and which may be permanent storage for permanent storage of files, such as media files. The media player 1 has some form of memory (not shown) for running programs under control of the controller 4. There will typically be some form of controller or control circuitry for controlling operation of the touchscreen 2, including providing image data to the touchscreen 2 for display, receiving and processing touch inputs received at the touchscreen 2, etc. The controller for the touchscreen 2 may be provided as part of the main controller 4 or as a separate controller for the touchscreen 2.

The media player 1 may also have for example transceiver circuits and processors and the like to enable the smartphone/media player 1 to connect wirelessly via WiFi, Bluetooth, etc., to a network. In the case that the media player 1 is provided as a function on a smartphone or the like, the smartphone/media player 1 will have transceiver circuits and processors and the like to enable the smartphone/media player 1 to connect to a cellular network.

The media player 1 is arranged to enter some power-saving mode if the media player 1 or at least the touchscreen 2 has not been used for a certain period of time. This is particularly important in the case that the media player 1 is battery-powered in order to prolong the battery life, i.e. the time before the battery is exhausted and needs recharging. As a particular example, if no touch input has been received by the touchscreen 2 for a certain period of time, the touchscreen 2 enters an inactive display state. For example, the touchscreen 2 may be put into a state where it is completely blank and not displaying any image. As another example, the touchscreen 2 may be put into a state in which the brightness is reduced compared to a full or high brightness "active" state. The touchscreen 2 may or may not be able to register and act on touch inputs whilst in the inactive or power-saving state, depending on the set-up and configuration of the media player 1.

In addition, as well as the touchscreen 2 being in an inactive display state, the media player 1 as a whole may be in some deeper sleep or idle state. As a particular example in the case of the media player 1 being a smartphone or the like, as well as the touchscreen 2 being in an inactive display state, the smartphone/media player 1 as a whole may be in some idle state or some other low power state in which signalling with the cellular network is low or minimal.

In contrast, in an active display state, the touchscreen 2 is displaying an image (possibly at full or high brightness, in contrast to a dim screen in a power-saving inactive display state). Moreover, the touchscreen 2 is able to register and act on touch inputs, i.e. the touchscreen 2 is responsive to a touch input, whilst in an active display state.

The media player 1, in particular the controller 4, is configured such that, in the case that the touchscreen 2 is in an inactive display state and touch input data received from the touchscreen 2 indicates that the touch input concerns a media control function, the controller 4 operates to control the media player 1 in accordance with the touch input data received from the touchscreen 2 without causing the touchscreen 2 to enter an active display state. The media control function may be for example one or more of play, pause, rewind, fast forward, fast backward or rewind, skip forward, skip back, volume up or down, etc.

The media player 1 may be configured so as to respond to different types of touch input on the touchscreen 2 corresponding to different types of media control functions. Some specific examples of this are described further below.

In general though, the media player 1 may be configured for example such that a double-tap on the touchscreen 2 is required as a touch input for at least one media control function in order to cause the touchscreen 2 to output corresponding touch input data to the controller 4. Requiring a double-tap can help to avoid or minimise inadvertent or unintentional control of the media player 1 and activation of the touchscreen 2 to an active display state. A double-tap can be differentiated from two successive single taps (which may control some other function of the media player 1 or device more generally) by for example measuring a time difference between two taps detected by the touchscreen 2 and deciding whether this time difference is above or below a time threshold.

The media player 1 (in particular the main controller 4 and/or a dedicated controller for the touchscreen 2) may be configured such that the media player 1 is responsive to a (single) tap on the touchscreen 2 when not in the active display state. This is particularly useful in the case that a double-tap on the touchscreen 2 is required as a touch input for at least one media control function in order to cause the touchscreen 2 to output corresponding touch input data to the controller 4, as it enables the media player 1 to register the first tap of the double-tap. A number of ways of achieving this are possible.

For example, the touchscreen 2 may be responsive to a (single) tap on the touchscreen 2 when not in the active display state. The touchscreen 2 may for example be continuously responsive or periodically responsive, the latter resulting in greater power savings when the media player 1 is not in an active display state.

Alternatively or additionally, the media player 1 may have a movement sensor which is configured to be responsive to movement of the media player 2 which occurs as a result of a tap on the touchscreen 2. The movement sensor may be for example one or more of an accelerometer and a gyroscope.

Alternatively or additionally, the media player 1 may have a proximity sensor which is configured to be responsive to proximity of a user's digit or other input device during a tap on the touchscreen 2.

In general, the media player 1 may alternatively or additionally be configured such that two simultaneous touches of the touchscreen 2 are required as a touch input for at least one media control function in order to cause the touchscreen 2 to output corresponding touch input data to the controller 4. This can again help to avoid or minimise inadvertent or unintentional control of the media player 1 and activation of the touchscreen 2 to an active display state. The two simultaneous touches of the touchscreen 2 may be achieved by for example touching the touchscreen 2 with two fingers or other input devices simultaneously.

The touchscreen 2 may be (notionally) divided into two or more regions. In the example shown in Figure 1, the touchscreen 2 is divided into three regions 2A, 2B, 2C. Each region 2A, 2B, 2C corresponds to and is used for registering different media control functions or sets of media control functions. This facilitates usage of the touchscreen 2 by a user, simplifying the range of different actions (tap, swipe or slide, hold, etc., as discussed below) that are needed for different media control functions.

The correspondence between different regions 2A, 2B, 2C of the touchscreen 2 and certain media control functions or set of media control functions may be arranged in one of numerous different ways. As just one specific example to illustrate this:
- first region 2A performs "skip to next" function with double tap with two fingers
- first region 2A performs "fast forward" function with double tap and hold with two fingers
- second region 2B performs "play/pause" function with double tap with two fingers
- third region 2C performs "skip to previous" function with double tap with two fingers
- third region 2C performs "fast backwards" or "rewind" function with double tap and hold with two fingers

As further examples of different touch inputs for different media control functions, the media player 1 may be configured such that for example sliding two fingers from the bottom to the top of the touchscreen 2, or at least generally from the bottom to the top of the touchscreen 2, performs a "volume up" function. Likewise, in an example, sliding two fingers from the top to the bottom of the touchscreen 2, or at least generally from the top to the bottom of the touchscreen 2, performs a "volume down" function.

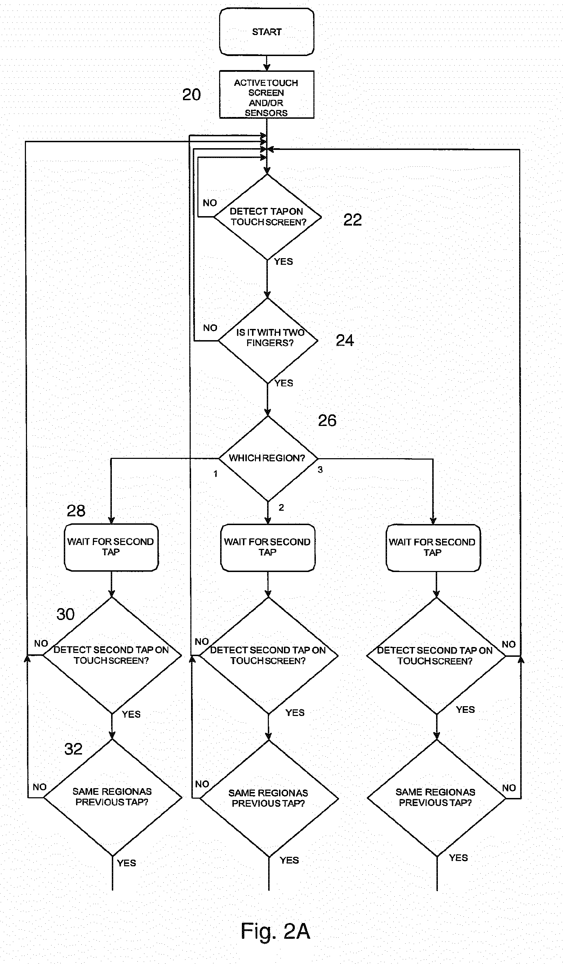

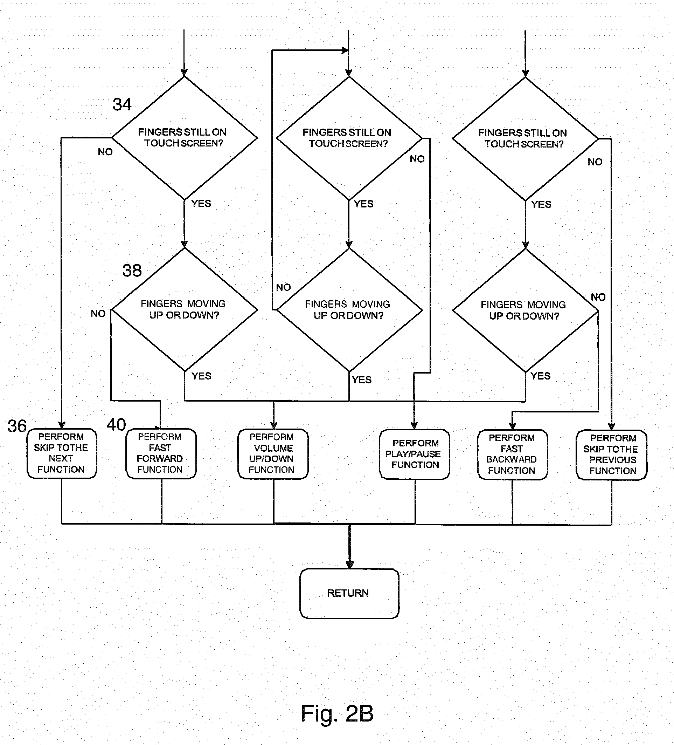

Figures 2A and 2B show a logic diagram for an example of operation of a media player 1 as described herein. This example corresponds to the correspondence between different regions 2A, 2B, 2C of the touchscreen 2 and certain specific media control functions given by way of example above.

At 20, the media player 1 is in an inactive display state and is responsive to a single tap on the touchscreen 2. (As discussed above, this may be by virtue of the touchscreen 2 being responsive to touch inputs and/or by the user of movement or proximity sensors, etc.)

At 22, it is determined whether or not a tap is detected. If a tap is detected, flow moves to 24. Otherwise, the media player 1 remains at 22 and continues to determine whether or not a tap is detected.

At 24, it is determined, in this example, whether the tap is with two fingers. If not, flow returns to 22. If yes, flow passes to 26.

At 26, it is determined which region 2A, 2B, 2C of the touchscreen 2 has been tapped. If it is the first region 2A, flow passes to 28.

Continuing the flow from 28, the media player 1 waits for a second tap. If a second tap is detected at 30, flow passes to 32; otherwise, if no second tap is detected (within for example a predetermined period of time), then flow returns to 20 described above.

At 32, it is determined whether the second tap which has been detected is a tap in the same region as the previous, first tap, in this example the first region 2A of the touchscreen 2. If not, then flow returns to 20 described above. If yes, then flow continues to 34.

At 34, it is determined whether the user's fingers or other input device are still touching the touchscreen 2. If no, then it can be concluded that the input to the touchscreen 2 by the user is a double-tap on the first region 2A of the touchscreen 2. In accordance with the specific example discussed above, this corresponds to a "skip to next" media control function 36. The controller 4 then controls playback of the media accordingly.

If at 34 it is determined that the user's fingers or other input device are still touching the touchscreen 2, flow passes to 38. At 38, it is determined whether the user's fingers or other input device are moving up or down along the touchscreen 2. If not, then this is determined to be a "hold". As such, in accordance with the specific example discussed above, this corresponds to a "fast forward" media control function 40. The controller 4 then controls playback of the media accordingly.

On the other hand, if at 38 it is determined that the user's fingers or other input device are moving up or down along the touchscreen 2, then, accordance with the specific example discussed above, this corresponds to a "volume up" or a "volume down" function respectively, and the controller 4 controls the playback volume from the media player 1 accordingly.

If at 26 it is determined that it is the second or third region 2B, 2C of the touchscreen 2 that has been tapped, a similar logic flow proceeds, resulting in, in this example, one of a "play/pause" function, a "skip to previous" function, a "fast backwards" or a "rewind" function, and a "volume up" or a "volume down" function. This is shown clearly in Figures 2A and 2B and will not be described here for reasons of brevity.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, modifications not described herein may also be employed within the scope of the invention, which is defined in the claims.

## Claims

1. A media player (1) for playing media, the media player (1) comprising:
a controller (4); and
a touchscreen (2) operable to receive touch inputs and configured to output corresponding touch input data to the controller (4), the touchscreen (2) having an inactive display state, which is a power-saving state in which the touchscreen (2) is not displaying any image, and an active display state, in which the touchscreen (2) is displaying an image at a full or high brightness;
wherein the controller (4) is configured to control the media player (1) in accordance with touch input data received from the touchscreen (2);
wherein the touchscreen (2) is divided into plural touch-sensitive input regions (2A, 2B, 2C) which are associated with different media control functions;
wherein the controller (4) is configured such that, in the case that the touchscreen (2) is in the inactive display state and touch input data received from the touchscreen (2) indicates that a touch input received at one of the plural touch-sensitive input regions (2A, 2B, 2C) concerns a media control function, the controller (4) operates the media player (1) to perform the media control function associated with the touch-sensitive input region (2A, 2B, 2C) at which the touch input was received, in accordance with the touch input data received from the touchscreen (2) without causing the touchscreen (2) to enter the active display state.

2. A media player (1) according to claim 1, configured such that a double-tap on the touchscreen (2) is required as a touch input for at least one media control function in order to cause the touchscreen (2) to output corresponding touch input data to the controller (4).

3. A media player (1) according to clam 2, configured such that the touchscreen (2) is responsive to a tap on the touchscreen (2) when not in the active display state so as to be able to register the tap as the first tap of the double-tap on the touchscreen (2).

4. A media player (1) according to claim 2 or claim 3, comprising a proximity sensor configured to be responsive to proximity of a user's digit or other input device during a tap on the touchscreen (2) so as to be able to register the tap as the first tap of the double-tap on the touchscreen (2).

5. A media player (1) according to any of claims 1 to 4, configured such that two simultaneous touches on the touchscreen (2) are required as a touch input for at least one media control function in order to cause the touchscreen (2) to output corresponding touch input data to the controller (4).

6. A method of operating a media player (1) which has a touchscreen (2) and a controller (4), wherein the touchscreen (2) is operable to receive touch inputs and configured to output corresponding touch input data to the controller (4), wherein the touchscreen (2) has an inactive display state, which is a power-saving state in which the touchscreen (2) is not displaying any image, and an active display state, in which the touchscreen (2) is displaying an image at a full or high brightness and wherein the touchscreen (2) is divided into plural touch-sensitive input regions (2A, 2B, 2C) which are associated with different media control functions, the method comprising:
receiving a touch input at one of the plural touch-sensitive input regions (2A, 2B, 2C) whilst the touchscreen (2) is in the inactive display state;
determining that touch input data received from the touchscreen (2) indicates that the touch input concerns a media control function; and
controlling the media player (1) to perform the media control function associated with the touch-sensitive input region (2A, 2B, 2C) at which the touch input was received, in accordance with the touch input data received from the touchscreen (2) without causing the touchscreen (2) to enter the active display state.

7. A method according to claim 6, wherein a double-tap on the touchscreen (2) is required as a touch input for at least one media control function in order to cause the touchscreen (2) to output corresponding touch input data to the controller (4).

8. A method according to claim 7, wherein the touchscreen (2) is responsive to a tap on the touchscreen (2) when not in the active display state so as to be able to register the tap as the first tap of the double-tap on the touchscreen (2).

9. A method according to claim 7 or claim 8, wherein a proximity sensor of the media player (1) is responsive to proximity of a user's digit or other input device during a tap on the touchscreen (2) so as to be able to register the tap as the first tap of the double-tap on the touchscreen (2).

10. A method according to any of claims 6 to 9, wherein two simultaneous touches on the touchscreen (2) are required as a touch input for at least one media control function in order to cause the touchscreen (2) to output corresponding touch input data to the controller (4).

## Patentansprüche

1. Mediaplayer (1) zum Abspielen von Medien, wobei der Mediaplayer (1) Folgendes umfasst:
eine Steuerung (4) und
einen Berührungsbildschirm (2), der dazu betreibbar ist, Berührungseingaben zu empfangen, und dazu konfiguriert ist, entsprechende Berührungseingabedaten an die Steuerung (4) auszugeben, wobei der Berührungsbildschirm (2) einen inaktiven Anzeigezustand, der ein Energiesparzustand ist, in dem der Berührungsbildschirm (2) keinerlei Bild anzeigt, und einen aktiven Anzeigezustand, in dem der Berührungsbildschirm (2) ein Bild in einer vollen oder hohen Helligkeit anzeigt, aufweist;
wobei die Steuerung (4) dazu konfiguriert ist, den Mediaplayer (1) gemäß Berührungseingabedaten, die von dem Berührungsbildschirm (2) empfangen werden, zu steuern;
wobei der Berührungsbildschirm (2) in mehrere berührungsempfindliche Eingaberegionen (2A, 2B, 2C) unterteilt ist, die mit unterschiedlichen Mediensteuerfunktionen assoziiert sind;
wobei die Steuerung (4) derart konfiguriert ist, dass in dem Fall, in dem der Berührungsbildschirm (2) im inaktiven Anzeigezustand ist und Berührungseingabedaten, die von dem Berührungsbildschirm (2) empfangen werden, angeben, dass eine Berührungseingabe, die an einer der mehreren berührungsempfindlichen Eingaberegionen (2A, 2B, 2C) empfangen wird, eine Mediensteuerfunktion betrifft, die Steuerung (4) den Mediaplayer (1) dazu betreibt, die Mediensteuerfunktion, die mit der berührungsempfindlichen Eingaberegion (2A, 2B, 2C) assoziiert ist, an der die Berührungseingabe empfangen wurde, gemäß den Berührungseingabedaten, die von dem Berührungsbildschirm (2) empfangen werden, durchzuführen, ohne zu bewirken, dass der Berührungsbildschirm (2) in den aktiven Anzeigezustand eintritt.

2. Mediaplayer (1) nach Anspruch 1, der derart konfiguriert ist, dass ein Doppeltippen auf den Berührungsbildschirm (2) als eine Berührungseingabe für mindestens eine Mediensteuerfunktion erforderlich ist, um zu bewirken, dass der Berührungsbildschirm (2) entsprechende Berührungseingabedaten an die Steuerung (4) ausgibt.

3. Mediaplayer (1) nach Anspruch 2, der derart konfiguriert ist, dass der Berührungsbildschirm (2) auf ein Tippen auf den Berührungsbildschirm (2) reagiert, wenn er nicht im aktiven Anzeigezustand ist, um das Tippen als das erste Tippen des Doppeltippens auf den Berührungsbildschirm (2) registrieren zu können.

4. Mediaplayer (1) nach Anspruch 2 oder 3, der einen Näherungssensor umfasst, der dazu konfiguriert ist, auf eine Nähe eines Fingers eines Benutzers oder einer anderen Eingabevorrichtung während eines Tippens auf den Berührungsbildschirm (2) zu reagieren, um das Tippen als das erste Tippen des Doppeltippens auf den Berührungsbildschirm (2) registrieren zu können.

5. Mediaplayer (1) nach einem der Ansprüche 1 bis 4, der derart konfiguriert ist, dass zwei gleichzeitige Berührungen auf dem Berührungsbildschirm (2) als eine Berührungseingabe für mindestens eine Mediensteuerfunktion erforderlich sind, um zu bewirken, dass der Berührungsbildschirm (2) entsprechende Berührungseingabedaten an die Steuerung (4) ausgibt.

6. Verfahren zum Betreiben eines Mediaplayers (1), der einen Berührungsbildschirm (2) und eine Steuerung (4) aufweist, wobei der Berührungsbildschirm (2) dazu betreibbar ist, Berührungseingaben zu empfangen, und dazu konfiguriert ist, entsprechende Berührungseingabedaten an die Steuerung (4) auszugeben, wobei der Berührungsbildschirm (2) einen inaktiven Anzeigezustand, der ein Energiesparzustand ist, in dem der Berührungsbildschirm (2) keinerlei Bild anzeigt, und einen aktiven Anzeigezustand, in dem der Berührungsbildschirm (2) ein Bild in einer vollen oder hohen Helligkeit anzeigt, aufweist, und wobei der Berührungsbildschirm (2) in mehrere berührungsempfindliche Eingaberegionen (2A, 2B, 2C) unterteilt ist, die mit unterschiedlichen Mediensteuerfunktionen assoziiert sind, wobei das Verfahren Folgendes umfasst:
Empfangen einer Berührungseingabe an einer der mehreren berührungsempfindlichen Eingaberegionen (2A, 2B, 2C), während der Berührungsbildschirm (2) im inaktiven Anzeigezustand ist;
Bestimmen, dass Berührungseingabedaten, die von dem Berührungsbildschirm (2) empfangen werden, angeben, dass die Berührungseingabe eine Mediensteuerfunktion betrifft; und
Steuern des Mediaplayers (1) dazu, die Mediensteuerfunktion, die mit der berührungsempfindlichen Eingaberegion (2A, 2B, 2C) assoziiert ist, an der die Berührungseingabe empfangen wurde, gemäß den Berührungseingabedaten, die von dem Berührungsbildschirm (2) empfangen werden, durchzuführen, ohne zu bewirken, dass der Berührungsbildschirm (2) in den aktiven Anzeigezustand eintritt.

7. Verfahren nach Anspruch 6, wobei ein Doppeltippen auf den Berührungsbildschirm (2) als eine Berührungseingabe für mindestens eine Mediensteuerfunktion erforderlich ist, um zu bewirken, dass der Berührungsbildschirm (2) entsprechende Berührungseingabedaten an die Steuerung (4) ausgibt.

8. Verfahren nach Anspruch 7, wobei der Berührungsbildschirm (2) auf ein Tippen auf den Berührungsbildschirm (2) reagiert, wenn er nicht im aktiven Anzeigezustand ist, um das Tippen als das erste Tippen des Doppeltippens auf den Berührungsbildschirm (2) registrieren zu können.

9. Verfahren nach Anspruch 7 oder 8, wobei ein Näherungssensor des Mediaplayers (1) auf eine Nähe eines Fingers eines Benutzers oder einer anderen Eingabevorrichtung während eines Tippens auf den Berührungsbildschirm (2) reagiert, um das Tippen als das erste Tippen des Doppeltippens auf den Berührungsbildschirm (2) registrieren zu können.

10. Verfahren nach einem der Ansprüche 6 bis 9, wobei zwei gleichzeitige Berührungen auf dem Berührungsbildschirm (2) als eine Berührungseingabe für mindestens eine Mediensteuerfunktion erforderlich sind, um zu bewirken, dass der Berührungsbildschirm (2) entsprechende Berührungseingabedaten an die Steuerung (4) ausgibt.

## Revendications

1. Lecteur multimédia (1) pour lecture multimédia, le lecteur multimédia (1) comprenant :
un contrôleur (4) ; et
un écran tactile (2) utilisable pour recevoir des saisies tactiles et configuré pour émettre des données saisies par commande tactile correspondantes au contrôleur (4), l'écran tactile (2) comportant un état d'affichage inactif, qui est un état permettant d'économiser de l'énergie au cours duquel l'écran tactile (2) n'affiche aucune image, et comportant un état d'affichage actif, au cours duquel l'écran tactile (2) affiche une image sous une luminosité totale ou forte luminosité ;
dans lequel le contrôleur (4) est configuré pour contrôler le lecteur multimédia (1) conformément aux données saisies par commande tactile en provenance de l'écran tactile (2) ;
dans lequel l'écran tactile (2) est divisé en une pluralité de régions d'entrées tactiles (2A, 2B, 2C) qui sont associées à différentes fonctions de contrôle multimédia ;
dans lequel le contrôleur (4) est configuré de sorte que, dans un cas où l'écran tactile (2) se trouve dans l'état d'affichage inactif et où les données saisies par commande tactile provenant de l'écran tactile (2) indiquent qu'une saisie tactile reçue à hauteur d'une région de la pluralité de régions d'entrées tactiles (2A, 2B, 2C) a trait à une fonction de contrôle multimédia, le contrôleur (4) active le lecteur multimédia (1) l'induisant à réaliser la fonction de contrôle multimédia associée à la région d'entrée tactile (2A, 2B, 2C) à hauteur de laquelle a été reçue la saisie tactile, conformément aux données saisies par commande tactile provenant de l'écran tactile (2) sans induire l'écran tactile (2) à passer à l'état d'affichage actif."

2. Lecteur multimédia (1) selon la revendication 1, configuré de sorte à faire double clic sur l'écran tactile (2) comme une saisie tactile pour au moins une fonction de contrôle multimédia, pour induire l'écran tactile (2) à émettre des données saisies par commande tactile correspondantes au contrôleur (4).

3. Lecteur multimédia (1) selon la revendication 2, configuré pour que l'écran tactile (2) soit réceptif à un clic sur l'écran tactile (2) lorsqu'il ne se trouve pas dans l'état d'affichage actif pour pouvoir enregistrer le clic en tant que premier clic du double clic sur l'écran tactile (2).

4. Lecteur multimédia (1) selon, soit la revendication 2, soit la revendication 3, comprenant un capteur de proximité configuré pour être réceptif à la proximité d'un dispositif à chiffres d'utilisateur ou de tout autre appareil de saisie au cours d'un clic sur l'écran tactile (2) pour pouvoir enregistrer le clic en tant que le premier clic du double clic sur l'écran tactile (2).

5. Lecteur multimédia (1) selon l'une quelconque des revendications 1 à 4, configuré de sorte que deux contacts simultanés sur l'écran tactile (2) sont nécessaires en tant que saisie tactile pour au moins une fonction de contrôle multimédia afin d'induire l'écran tactile (2) à émettre des données saisies par commande tactile correspondantes au contrôleur (4).

6. Procédé de fonctionnement d'un lecteur multimédia (1) doté d'un écran tactile (2) et d'un contrôleur (4), dans lequel l'écran tactile (2) est utilisable pour recevoir des saisies tactiles et configuré pour émettre des données saisies par commande tactile correspondantes au contrôleur (4), dans lequel l'écran tactile (2) comporte un état d'affichage inactif, qui est un état permettant d'économiser de l'énergie au cours duquel l'écran tactile (2) n'affiche aucune image, et comporte un état d'affichage actif, au cours duquel l'écran tactile (2) affiche une image sous une luminosité totale ou une forte luminosité et dans lequel l'écran tactile (2) est divisé en une pluralité de régions d'entrées tactiles (2A, 2B, 2C) qui sont associées à différentes fonctions de contrôle multimédia, le procédé consistant à :
recevoir une saisie tactile à hauteur d'une région de la pluralité de régions d'entrées tactiles (2A, 2B, 2C), lorsque l'écran tactile (2) se trouve dans l'état d'affichage inactif ;
déterminer que les données saisies par commande tactile provenant de l'écran tactile (2) indiquent que la saisie tactile a trait à une fonction de contrôle multimédia ; et
contrôler le lecteur multimédia (1) pour l'induire à réaliser la fonction de contrôle multimédia associée à la région d'entrée tactile (2A, 2B, 2C) à hauteur de laquelle a été reçue la saisie tactile, conformément aux données saisies par commande tactile provenant de l'écran (2) sans induire l'écran tactile (2) à passer à l'état d'affichage actif.

7. Procédé selon la revendication 6, dans lequel il faut double cliquer sur l'écran tactile (2) comme une saisie tactile pour au moins une fonction de contrôle multimédia, pour induire l'écran tactile (2) à émettre des données saisies par commande tactile correspondantes au contrôleur (4).

8. Procédé selon la revendication 7, dans lequel l'écran tactile (2) est réceptif à un clic sur l'écran tactile (2) lorsqu'il ne se trouve pas dans l'état d'affichage actif pour pouvoir enregistrer le clic en tant que premier clic du double clic sur l'écran tactile (2).

9. Procédé selon, soit la revendication 7, soit la revendication 8, dans lequel un capteur de proximité du lecteur multimédia (1) est réceptif à la proximité d'un dispositif à chiffres d'utilisateur ou de tout autre appareil de saisie au cours d'un clic sur l'écran tactile (2) pour pouvoir enregistrer le clic en tant que premier clic du double clic sur l'écran tactile (2).

10. Procédé selon l'une quelconque des revendications 6 à 9, dans lequel deux contacts simultanés sur l'écran tactile (2) sont nécessaires en tant que saisie tactile pour au moins une fonction de contrôle multimédia, afin d'induire l'écran tactile (2) à émettre des données saisies par commande tactile correspondantes au contrôleur (4).
